(19) Europäisches Patentamt
European Patent Office
Office européen des brevets

(11) **EP 2 315 963 B1**

(12) **EUROPÄISCHE PATENTSCHRIFT**

(45) Veröffentlichungstag und Bekanntmachung des Hinweises auf die Patenterteilung:
**25.01.2012 Patentblatt 2012/04**

(21) Anmeldenummer: **09781085.7**

(22) Anmeldetag: **24.07.2009**

(51) Int Cl.:
*F16D 48/02* (2006.01)     *F16D 48/06* (2006.01)
*F16D 25/08* (2006.01)

(86) Internationale Anmeldenummer:
**PCT/EP2009/059619**

(87) Internationale Veröffentlichungsnummer:
**WO 2010/020523 (25.02.2010 Gazette 2010/08)**

(54) **VERFAHREN ZUR KOMPENSATION VON VOLUMENÄNDERUNGEN EINES HYDRAULIKFLUIDS IN EINER HYDRAULISCHEN BETÄTIGUNGSEINRICHTUNG ZUR BETÄTIGUNG EINER KUPPLUNG, SOWIE HYDRAULISCHE BETÄTIGUNGSEINRICHTUNG**

METHOD FOR COMPENSATING FOR VOLUME CHANGES OF A HYDRAULIC FLUID IN A HYDRAULIC ACTUATING DEVICE FOR ACTUATING A CLUTCH, AND HYDRAULIC ACTUATING DEVICE

PROCEDE DE COMPENSATION DE CHANGEMENTS DE VOLUME D'UN FLUIDE HYDRAULIQUE DANS UN DISPOSITIF D'ACTIONNEMENT HYDRAULIQUE DESTINE A ACTIONNER UN EMBRAYAGE, AINSI QUE DISPOSITIF D'ACTIONNEMENT HYDRAULIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **19.08.2008 DE 102008041353**

(43) Veröffentlichungstag der Anmeldung:
**04.05.2011 Patentblatt 2011/18**

(73) Patentinhaber: **Robert Bosch GmbH 70442 Stuttgart (DE)**

(72) Erfinder:
• **URBAN, Werner**
  **71665 Vaihingen/Enz (DE)**
• **KLYMENKO, Mykhaylo**
  **70839 Gerlingen (DE)**

(56) Entgegenhaltungen:
EP-A1- 1 491 787     EP-A1- 1 630 442
EP-A2- 1 433 971     WO-A1-2009/022450
FR-A1- 2 777 230     US-A1- 2004 157 704

## Beschreibung

Die Erfindung betrifft ein Verfahren zur Kompensation von Volumenänderungen eines Hydraulikfluids in einer hydraulischen Betätigungseinrichtung zur Betätigung einer Kupplung gemäß dem Oberbegriff des Anspruchs 1 und eine hydraulische Betätigungseinrichtung zur Betätigung einer Kupplung gemäß dem Oberbegriff des Anspruchs 6.

## Stand der Technik

Hydraulisch betätigte Kupplungen werden unter anderem als Trennkupplung zwischen einer Verbrennungskraftmaschine und einem Antriebsstrang von Kraftfahrzeug-Hybridantrieben in Form von nicht-leistungsverzweigenden Parallel-Hybriden eingesetzt, um die Verbrennungskraftmaschine durch Öffnen der Trennkupplung für den rein elektrischen Fahrbetrieb vom Antriebsstrang abzukuppeln bzw. durch Schließen der Trennkupplung bei erhöhtem Leistungsbedarf oder niedrigem Batterieladezustand mittels der elektrischen Maschine wieder zu starten.

Um Störungen im Antriebsstrang zu vermeiden, wird die Trennkupplung während des Öffnens und des Schließens so gesteuert, dass zwischen ihren Kupplungsscheiben ein definiertes Kupplungs- oder Schlupfmoment vorhanden ist. Zu diesem Zweck wird eine elektrohydraulische Betätigungseinrichtung verwendet, die einen elektrisch gesteuerten und angetriebenen Spindel-Aktuator und einen mit dem Spindel-Aktuator gekoppelten Geberzylinder umfasst, der durch eine Schnüffelbohrung mit einem Vorratsbehälter für Hydraulikfluid und durch eine Hydraulikleitung mit einem Nehmerzylinder verbunden ist. Eine mit einem Kolben des Nehmerzylinders verbundene Kolbenstange wirkt auf eine mit der Drehzahl der Kurbelwelle des Verbrennungsmotors rotierende trichterförmige Tellerfeder ein, die sich zwischen ihrem inneren, im Kontakt mit der Kolbenstange stehenden Umfang und ihrem äußeren, mit einer der Kupplungsscheiben verbundenen Umfang schwenkbar gegen ein ortsfestes Widerlager abstützt. Um das gewünschte Kupplungs- oder Schlupfmoment zwischen den Kupplungsscheiben zu erzeugen, wird der Spindel-Aktuator um ein bestimmtes Maß verfahren, und somit auch der Kolben des Geberzylinders, wodurch Hydraulikfluid in den Nehmerzylinder gedrückt und von dessen Kolbenstange eine Kraft auf die Tellerfeder aufgebracht wird, die dann eine dem Kupplungs- oder Schlupfmoment entsprechende Andruckkraft zwischen den beiden Kupplungsscheiben erzeugt. Zwischen dem Verfahrweg des Spindel-Aktuators und dem Kupplungs- oder Schlupfmoment besteht dabei ein definierter Zusammenhang, der im Folgenden als nominale Kupplungskennlinie bezeichnet wird.

Bei geschlossener Trennkupplung und bei unbetätigtem Spindel-Aktuator ist die Schnüffelbohrung zwischen dem Geberzylinder und dem Vorratsbehälter mit Hydraulikfluid offen, so dass durch Temperaturschwankungen hervorgerufene Volumenänderungen des Hydraulikfluids im Geberzylinder, im Nehmerzylinder und in der Hydraulikleitung zwischen den Zylindern durch die Schnüffelbohrung ausgeglichen werden können. Wenn die Trennkupplung im elektrischen Fahrbetrieb geöffnet ist, ist die Schnüffelbohrung jedoch geschlossen, wodurch im Geberzylinder, im Nehmerzylinder und in der Hydraulikleitung ein definiertes Volumen an Hydraulikfluid eingeschlossen ist. Eine thermische Ausdehnung oder Schrumpfung dieses Volumens führt daher unmittelbar zu einer Änderung der von der Kolbenstange auf die Tellerfeder ausgeübten Kraft und über diese auf die Andruckkraft der Kupplungsscheiben und somit zu Abweichungen vom gewünschten Kupplungs- oder Schlupfmoment.

Wie sich gezeigt hat, können im Hydraulikfluid in der Tat signifikante Temperaturänderungen auftreten, vor allem wenn beim Öffnen der Trennkupplung kaltes Hydraulikfluid in den heißen Nehmerzylinder gedrückt wird und sich innerhalb des Nehmerzylinders relativ schnell, das heißt innerhalb weniger Sekunden, erwärmt. Da das bei geöffneter Trennkupplung im Nehmerzylinder befindliche Hydraulikvolumen einen großen Anteil am Gesamtvolumen des eingeschlossenen Hydraulikfluids ausmacht, ist in diesem Fall eine Volumenzunahme möglich, die erhebliche störende Auswirkungen auf die nominale Kupplungskennlinie und damit Abweichungen des gewünschten Kupplungs- oder Schlupfmoments zur Folge hat.

Die EP 1 401 787 A1 zeigt beispielsweise ein Verfahren zum Adaptieren einer in einer elektronischen Steuereinrichtung abgelegten Beziehung zwischen einem von einer Kupplung übertragbaren Moment und einer Steuergröße zum Steuern einer Betätigungseinrichtung der Kupplung. Die Kupplung ist dabei in einem automatisierten Fahrzeugantriebsstrang im Kraftfluss zwischen einem Antriebsmotor und einem Schaltgetriebe angeordnet. Bei dem Verfahren ist es vorgesehen, dass aus mindestens einem Adaptionsparameter das von der Kupplung übertragbare Moment berechnet und der Steuergröße als aktualisiertes übertragbares Moment zugeordnet wird. Weiterhin zeigt die US 2004/0157704 A1 ein Verfahren zum Anpassen einer Kupplung. FR 2777230 A1 zeigt ein Verfahren und eine Betätigungseinrichtung nach dem Oberbegriff der entsprechenden Ansprüche 1 und 6. Ausgehend hiervon liegt der Erfinduhg die Aufgabe zugrunde, ein Verfahren und eine Kupplung der eingangs genannten Art bereitzustellen, mit denen durch Temperaturschwankungen verursachte Volumenänderungen von eingeschlossenem Hydraulikfluid im Geberzylinder, im Nehmerzylinder und in der Hydraulikleitung zwischen den Zylindern ausgeglichen werden können.

**Offenbarung der Erfindung**

Im Hinblick auf das Verfahren wird die Aufgabe erfindungsgemäß durch die Merkmale der unabhängigen Ansprüche 1 und 6 gelöst.

Eine bevorzugte Ausgestaltung des erfindungsgemäßen Verfahrens sieht vor, dass die Position des Kolbens des Geberzylinders durch gesteuerte Betätigung des Aktuators korrigiert wird, um den Kolben des Geberzylinders entsprechend der thermischen Schrumpfung des Hydraulikfluids im Nehmerzylinder vorzuschieben.

Als Grundlage für die Steuerung des Aktuators dient zweckmäßig eine Temperaturdifferenz zwischen einer gemessenen Temperatur am Nehmerzylinder und einer Referenztemperatur.

Da eine signifikante thermische Ausdehnung des Hydraulikfluids im Nehmerzylinder insbesondere dann festgestellt wird, wenn sich kaltes, unmittelbar nach dem Öffnen der Kupplung in den heißen Nehmerzylinder gedrücktes Hydraulikfluid innerhalb des Nehmerzylinders relativ schnell erwärmt und dadurch ausdehnt, sieht die Erfindung vor, dass die Position des Kolbens des Geberzylinders unmittelbar nach dem Öffnen der Kupplung korrigiert wird, vorzugsweise entsprechend der folgenden Beziehung:

$$l_{Korr,GZ} = K_E \times (t_{NZ} - t_{NZ,Ref}) \times e^{(-t/\tau_E)} \qquad (1)$$

wobei $l_{Korr,GZ}$ die Positionskorrektur am Geberzylinder, $K_E$ ein Erwärmungsfaktor, $\tau_E$ eine Zeitkonstante für die Erwärmungsphase des Hydraulikfluids, $t_{NZ}$ die aktuelle Temperatur am Nehmerzylinder und $t_{NZ,Ref}$ die Temperatur ist, die am Nehmerzylinder mindestens vorliegen muss, damit ein entsprechender Wärmeeintrag in das Hydraulikfluid stattfinden kann.

Da eine signifikante thermische Schrumpfung des Hydraulikfluids im Nehmerzylinder insbesondere dann festgestellt wird, wenn sich das Hydraulikfluid im Nehmerzylinder bei geöffneter Kupplung allmählich abkühlt, sieht eine noch weitere bevorzugte Ausgestaltung der Erfindung vor, die Position des Kolbens des Geberzylinders kurze Zeit nach dem Öffnen der Kupplung erneut zu korrigieren, vorzugsweise entsprechend der folgenden Beziehung:

$$l_{Korr,GZ} = K_A \times (t_{NZ,Opn} - t_{NZ}) \qquad (2)$$

wobei $l_{Kor,Gz}$ die Positionskorrektur am Geberzylinder, $K_A$ ein Abkühlungsfaktor, $t_{NZ,Opn}$ die Temperatur am Nehmerzylinder zum Zeitpunkt des Öffnens der Kupplung und $t_{NZ}$ die aktuelle Temperatur am Nehmerzylinder ist.

Die besten Ergebnisse werden erzielt, wenn man die durch die obigen Beziehung (1) und (2) erhaltenen Werte für die Positionskorrektur am Kolben des Geberzylinders einander überlagert bzw. addiert.

**Kurze Beschreibung der Zeichnungen**

Im folgenden wird die Erfindung anhand eines in der Zeichnung dargestellten Ausführungsbeispiels näher erläutert. Es zeigen

Fig. 1 eine schematische Darstellung einer hydraulisch betätigten Trennkupplung für einen Kraftfahrzeug-Hybridantrieb;

Fig. 2 den Druckverlauf im Nehmerzylinder mit und ohne Kompensation von Volumenänderungen des Hydraulikfluids infolge von Temperaturschwankungen;

Fig. 3 den Verlauf einer nominalen Kupplungskennlinie der Kupplung, die den Zusammenhang zwischen einem Bewegungsweg eines Aktuators zum Betätigen der Kupplung und dem Druck zwischen zwei Kupplungsscheiben der Kupplung wiedergibt;

Fig. 4 den Verlauf der nominalen Kupplungskennlinie sowie von Abweichungen der Kupplungskennlinie infolge von betriebsbedingten Temperaturschwankungen.

## Ausführungsform der Erfindung

Die in der Zeichnung dargestellte Trennkupplung 2 eines nicht-leistungsverzweigenden Parallel-Hybridantriebs eines Kraftfahrzeugs ist zwischen einer Verbrennungskraftmaschine des Hybridantriebs und einem Antriebsstrang des Kraftfahrzeugs angeordnet. Die Trennkupplung 2 dient dazu, einerseits die Verbrennungskraftmaschine beim Übergang in den elektrischen Fahrbetrieb vom Antriebsstrang abzukoppeln, wenn das Kraftfahrzeug allein mit Hilfe einer elektrischen Maschine des Hybridantriebs betrieben werden soll, bzw. andererseits bei einem erhöhten Leistungsbedarf und/oder bei einem niedrigen Batterieladezustand die Verbrennungskraftmaschine zum Übergang in den hybriden Fahrbetrieb wieder mittels der elektrischen Maschine zu starten.

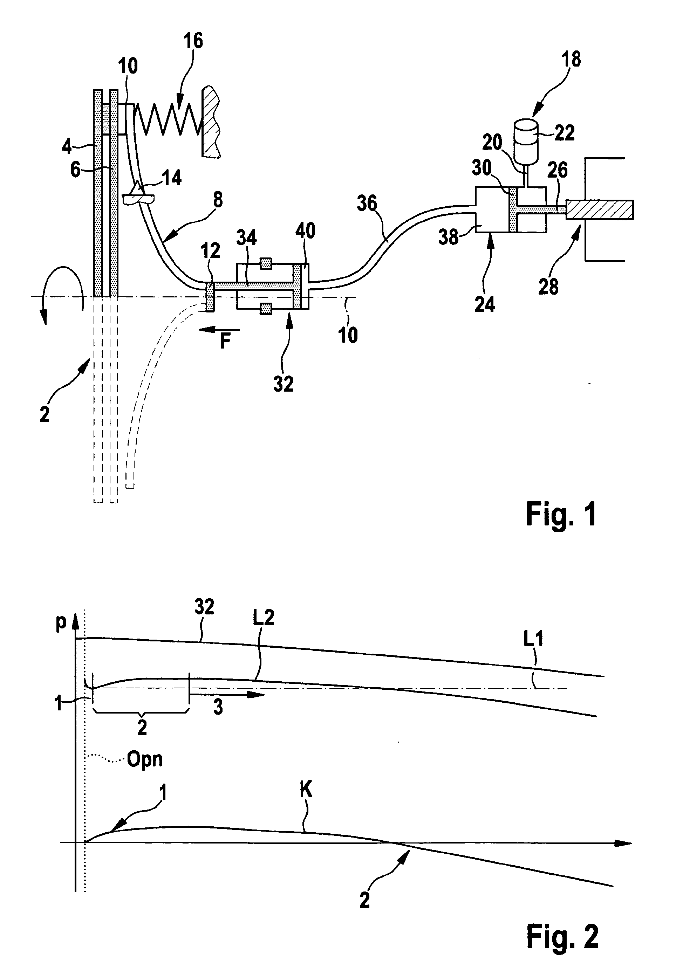

Wie am besten in Fig. 1 dargestellt, umfasst die Trennkupplung 2 zwei Kupplungsscheiben 4, 6 und eine gebogene Tellerfeder 8 in Form eines flachen Trichters, die sich gemeinsam um die Drehachse 10 einer Kurbelwelle der Verbrennungskraftmaschine drehen. Die Tellerfeder 8 ist an ihrem äußeren Umfang 10 mit der benachbarten Kupplungsscheibe 6 verbunden und zwischen ihrem äußeren Umfang 10 und einem mittigen Betätigungsteil 12 in einem ortsfesten Widerlager 14 schwenkbar gelagert. Die Trennkupplung 2 ist normalerweise geschlossen und wird zum Übergang in den elektrischen Fahrbetrieb geöffnet, indem eine Kraft F in Richtung des Pfeils in Fig. 1 auf den mittigen Betätigungsteil 12 ausgeübt wird, um die Tellerfeder 8 um das Widerlager 14 zu verschwenken und die mit der Tellerfeder 8 verbundene Kupplungsscheibe 6 entgegen der Richtung des Pfeils in Fig. 1 von der anderen Kupplungsscheibe 4 weg zu bewegen. Das Schließen der Kupplung 2 erfolgt mit Hilfe einer Rückstellfeder 16, die auf der zur Kupplungsscheibe 6 entgegengesetzten Seite auf den äußeren Umfang 10 der Tellerfeder 8 einwirkt und diese dort zusammen mit der Kupplungsscheibe 6 gegen die andere Kupplungsscheibe 4 drückt, wenn keine Kraft F auf den Betätigungsteil 12 einwirkt.

Die Betätigung der Trennkupplung 2 wird mittels einer hydraulischen Betätigungseinrichtung 18 vorgenommen, die einen durch eine Schnüffelbohrung 20 mit einem Vorratsbehälter 22 für Hydraulikfluid verbundenen Geberzylinder 24, einen starr mit einer Kolbenstange 26 des Geberzylinders 24 verbundenen elektrisch gesteuerten Spindel-Aktuator 28 zum Verschieben eines Kolbens 30 des Geberzylinders 24, sowie einen zum Ausrücken der Kupplung 2 dienenden Nehmerzylinder 32 umfasst, dessen Kolbenstange 34 auf den Betätigungsteil 12 der Kupplung 2 einwirkt. Der Geberzylinder 24 und der Nehmerzylinder 32 sind durch eine Hydraulikleitung 36 verbunden, die jeweils auf der von der Kolbenstange 26 bzw. 34 abgewandten Seite in den Zylinder 24 bzw. 32 mündet.

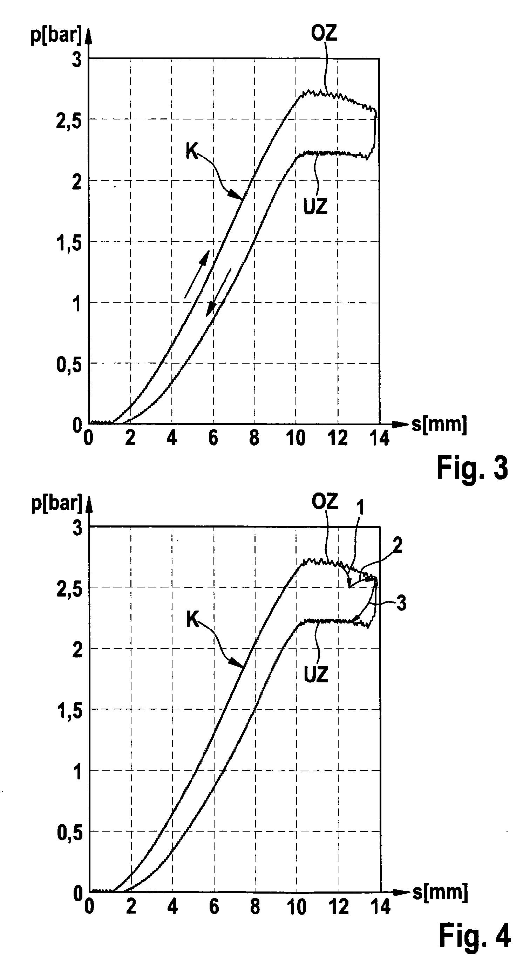

Bei der Betätigung der Trennkupplung 2 ergibt sich infolge der Federkennlinie der Tellerfeder 8 ein in Fig. 3 dargestellter definierter Druck/Weg-Venauf, der den Druck zwischen den beiden Kupplungsscheiben 4, 6 in Abhängigkeit vom Verfahrweg des Spindel-Aktuators 28 wiedergibt und üblicherweise als nominale Kupplungskennlinie K der Kupplung 2 bezeichnet wird. Da der Druck/Weg-Verlauf beim Ein- und Ausfahren des Geber- und Nehmerzylinders 24, 32 jeweils unterschiedlich ist, ist die Kupplungskennlinie K eine Hysterese.

Die Schnüffelbohrung 20 ist so im Geberzylinder 24 angeordnet, dass sie bei geschlossener Kupplung 2 in einen mit der Hydraulikleitung 36 kommunizierenden Kolbenraum 38 des Zylinders 24 mündet, so dass eine durch Temperaturschwankungen bedingte Ausdehnung oder Schrumpfung des Hydraulikfluidvolumens im Kolbenraum 38 des Geberzylinders 24, in der Hydraulikleitung 36 und in einem mit der Hydraulikleitung 36 kommunizierenden Kolbenraum 40 des Nehmerzylinders 32 ausgeglichen werden kann.

Bei geöffneter Kupplung 2 mündet die Schnüffelbohrung 20 jedoch auf der entgegengesetzten Seite des Kolbens 30 in den Zylinder 24, wie in Fig. 1 dargestellt, so dass im Kolbenraum 38 des Geberzylinders 24, in der Hydraulikleitung 36 und im Kolbenraum 40 des Nehmerzylinders 32 ein definiertes unveränderliches Hydraulikfluidvolumen eingeschlossen ist. Eine durch Temperaturschwankungen bedingte Ausdehnung oder Schrumpfung dieses Hydraulikfluidvolumens führt daher zu einer Veränderung der von der Kolbenstange 34 auf die Tellerfeder 8 ausgeübten Kraft F und somit zu einer unerwünschten Abweichung von der nominalen Kupplungskennlinie K.

Eine Ausdehnung des Hydraulikfluidvolumens tritt zum Beispiel auf, wenn die Verbrennungskraftmaschine längere Zeit mit höherer Drehzahl betrieben wird, wie z.B. bei einer Autobahnfahrt, wodurch sich der Nehmerzylinder 32 stark erhitzt, und anschließend in elektrischen Fahrbetrieb übergegangen wird, wie z.B. in einer Stau-Situation. Wenn in diesem Fall zum Übergang in den elektrischen Fahrbetrieb die Kupplung 2 durch Verfahren des Spindel-Aktuators 28 geöffnet wird, wird aus dem Geberzylinder 24 kaltes Hydraulikfluid in den heißen Nehmerzylinder 32 gedrückt, wo es sich innerhalb weniger Sekunden erwärmt. Infolge der Erwärmung dehnt sich das eingeschlossene Hydraulikfluid aus, das sich bei geöffneter Kupplung 2 zum größten Teil im Nehmerzylinder 32 befindet.

Dabei ergibt sich nach dem Öffnen der Kupplung 2 ein in Fig. 4 dargestellter typischer Druck/Weg-Verlauf, der im oberen Bereich der Hysterese in drei, in Fig. 4 mit 1, 2 und 3 bezeichneten Phasen von der nominalen Kupplungskennlinie K abweicht:

Phase 1 stellt einen kurzen Druckeinbruch dar, der unmittelbar nach dem Öffnen der Kupplung 2 erfolgt und einerseits durch einen Druckabfall infolge einer Wegumkehr der Kolbenstangen 28 und 34 der beiden Zylinder 24 und 32 sowie andererseits durch einen Druckabfall infolge einer abnehmenden Zentrifugalkraft an der Tellerfeder 8 und einer dadurch bedingten Zunahme des Wegs der Kolbenstange 34 verursacht wird und zu einer Abweichung von einem oberen Zweig oZ der Hysterese K nach unten führt.

Phase 2 stellt einen wenige Sekunden dauernden Wiederanstieg des Drucks mit einer anschließenden Sättigung dar, der durch den zuvor beschriebenen Wärmeeintrag aus dem Nehmerzylinder 32 in das Hydraulikfluid verursacht wird und ein Zurücklaufen auf den oberen Zweig oZ der Hysterese K bewirkt.

Phase 3 stellt einen anschließenden Druckabfall infolge einer Abkühlung des Nehmerzylinders 32 und des darin enthaltenen Hydraulikfluids dar, wodurch ein Übergang auf den unteren Zweig uZ der Hysterese K erfolgt.

Die durch Temperaturschwankungen bedingten Änderungen des Druck/Weg-Verlauf in den Phasen 2 und 3 werden erfindungsgemäß durch eine entsprechende Korrektur der Position des Kolbens 30 des Geberzylinders 24 ausgeglichen, um im Idealfall während des elektrischen Fahrbetriebs einen konstanten Druck im Kolbenraum 40 des Nehmerzylinders 32 zu erzielen, wie in Fig. 2 durch die strichpunktierte Linie L1 oberhalb der drei Phasen 1, 2 und 3 dargestellt. Die durchgezogene Linie L2 in dieser Figur stellt den Verlauf des Drucks im Nehmerzylinder 32 ohne Kompensation dar.

In der Phase 2 kann die Ausdehnung des Hydraulikfluids näherungsweise durch eine Exponentialfunktion angegeben werden, womit die notwendigen Positionskorrektur am Geberzylinder 24 durch die folgende Beziehung berechnet werden kann:

$$l_{Korr,GZ} = K_E \ \times \ (t_{NZ} - t_{NZ,Ref}) \times e^{(-t/\tau_E)} \qquad\qquad (1)$$

Dabei ist $l_{Korr,GZ}$ die Positionskorrektur am Geberzylinder 24, $K_E$ ist ein Erwärmungsfaktor zur Berücksichtigung der Ausdehnung des Hydraulikfluids aufgrund des Wärmeeintrags durch den Nehmerzylinder 32, $\tau_E$ ist eine Zeitkonstante für die Erwärmungsphase des Hydraulikfluids, $t_{NZ}$ ist die aktuelle Temperatur am Nehmerzylinder 32 und $t_{NZ,Ref}$ ist die Referenztemperatur, die am Nehmerzylinder 32 mindestens vorliegen muss, damit ein entsprechender Wärmeeintrag in das Hydraulikfluid stattfinden kann.

Es hat sich gezeigt, dass ein relevanter Wärmeeintrag in das Hydraulikfluid und damit eine entsprechende Ausdehnung desselben erst dann erfolgt, wenn der Nehmerzylinder 32 eine Mindesttemperatur besitzt, die entsprechend höher sein muss als die mittlere Temperatur des Hydraulikfluids. Deshalb ist es sinnvoll, als Nehmerzylinder-Referenztemperatur $t_{NZ,Ref}$ die Temperatur des Hydraulikfluids außerhalb des Nehmerzylinders 32 heranzuziehen. Da diese Temperatur üblicherweise nicht bekannt ist, kann als Nehmerzylinder-Referenztemperatur $t_{NZ,Ref}$ zweckmäßig entweder eine konstante Temperatur verwendet werden, oder die Umgebungstemperatur, zum Beispiel wenn der Geberzylinder 24 in einem Teil des Kraftfahrzeugs verbaut ist, der Umgebungstemperatur besitzt.

Dabei ist es grundsätzlich nicht unbedingt erforderlich, die genaue Temperatur und damit die genaue Ausdehnung des Hydraulikfluids zu kennen. Dadurch, dass sich das System während des elektrischen Fahrens stets innerhalb der Hysterese des oberen Bereichs der Kupplungskennlinie K befindet, ist es lediglich relevant zu wissen, ob eine Ausdehnung oder eine Schrumpfung des Hydraulikfluids stattfindet. Abhängig davon bewegt sich der Druck entweder entlang des oberen Zweigs oZ oder entlang des unteren Zweigs uZ der Hysterese. Da diese beiden Zweige im oberen Bereich der Kupplungskennlinie K nahezu waagerecht verlaufen, wie in Fig. 3 und 4 dargestellt, spielt der Betrag der Ausdehnung bzw. Schrumpfung des Hydraulikfluids nur eine untergeordnete Rolle. Vielmehr ist die Kenntnis der Größe der Hysterese und des Übergangsverhaltens beim Übergang vom oberen Zweig oZ zum unteren Zweig uZ und umgekehrt von Bedeutung.

Die Zeitkonstante $\tau_E$ für die Erwärmungsphase des Hydraulikfluids lässt sich aus entsprechenden Temperatur- und Druckmessungen am Nehmerzylinder 32 ermitteln und liegt allgemein im Bereich von wenigen Sekunden.

Der Betrag des Druckanstiegs in Phase 2 hängt vor allem davon ab, wie weit nach der Phase 1 der Druck in die Hysterese hinein eingebrochen ist. Messungen haben gezeigt, dass sich der Druck umso sicherer auf den oberen Zweig oZ der Hysterese zurück bewegt, je höher der Wärmeeintrag in das Hydraulikfluid im Nehmerzylinder 32 ist.

Für die Phase 3, in der sich das Hydraulikfluid infolge der Abkühlung des Systems aufgrund des rein elektrischen Fahrbetriebs ebenfalls abkühlt, kann hinsichtlich der Schrumpfung des Hydraulikfluids angenommen werden, dass diese proportional zur Temperaturabnahme des Systems erfolgt. Da sich zudem gezeigt hat, dass die Temperaturabnahme im Hydraulikfluid mit der Temperaturabnahme des Nehmerzylinders 32 vergleichbar ist, reicht die Kenntnis der Temperatur des Nehmerzylinders 32 für die Abschätzung der Schrumpfung des Hydraulikfluids aus, womit sich die notwendigen Positionskorrektur am Geberzylinder 24 durch die folgende Beziehung ergibt:

$$I_{Korr,GZ} = K_A \times (t_{NZ,Opn} - t_{NZ}) \qquad (2)$$

Dabei ist $I_{Korr,GZ}$ die Positionskorrektur am Geberzylinder 24, $K_A$ ist ein Abkühlungsfaktor, $t_{NZ,Opn}$ ist die Temperatur am Nehmerzylinder 32 zum Zeitpunkt des Öffnens der Kupplung 2 und $t_{NZ}$ ist die aktuelle Temperatur am Nehmerzylinder 32.

Durch die Überlagerung der beiden vorgenannten Beziehungen (1) und (2) ergibt sich die gesamte zur Kompensation der Volumenänderungen des Hydraulikfluids erforderliche Positionskorrektur am Geberzylinder 24, wie in Fig. 2 durch die durchgezogene Linie K dargestellt.

Wenn der Druck im hydraulischen System nicht kontinuierlich gemessen wird, können temperaturbedingten Abweichungen des Druck-Weg-Verlaufs mittels der zuvor genannten Beziehungen (1) und (2) zumindest in einer gesteuerter Form kompensiert werden, wozu allerdings eine genaue Vermessung des hydraulischen Systems (Druck-Weg-Kennlinie. Volumenverteilungen, Hydraulikgeometrien, Wärmeausdehnungskoeffizienten, Zeitverhalten Wärmeeintrag, usw. ) erforderlich ist.

Besser ist es, den Systemdruck kontinuierlich zu messen und ihn mit dem erfindungsgemäßen Verfahren auf den gewünschten Wert zu regeln, wodurch sich die durch Temperaturschwankungen bedingten Störungen noch wesentlich genauer ausgleichen lassen.

## Patentansprüche

1. Verfahren zur Kompensation von Volumenänderungen eines Hydraulikfluids in einer zur Betätigung einer Kupplung (2) dienenden Betätigungseinrichtung (18), die einen Geberzylinder (24), einen mit einem Kolben (30) des Geberzylinders (24) verbundenen Aktuator (28) und einen hydraulisch mit dem Geberzylinder (24) verbundenen Nehmerzylinder (32) zum Ausrücken der Kupplung (2) umfasst, wobei die Position eines Kolbens (30) des Geberzylinders (24) durch gesteuerte Betätigung des Aktuators (28) temperaturabhängig korrigiert wird und das Hydraulikfluid in dem Geberzylinder (24), dem Nehmerzylinder (32) sowie einer den Geberzylinder (24) und den Nehmerzylinder (32) verbindenden Hydraulikleitung (36) eingeschlossen ist, **dadurch gekennzeichnet, dass** die Position des Kolbens (30) in Abhängigkeit von einer Temperaturdifferenz zwischen einer gemessenen Temperatur am Nehmerzylinder (32) und einer Referenztemperatur unmittelbar nach dem Öffnen der Kupplung (2) korrigiert wird, um eine thermische Ausdehnung des Hydraulikfluids im Nehmerzylinder (32) zu kompensieren, wobei die Korrektur der Position des Kolbens (30) der folgenden Beziehung folgt:

$$I_{Korr,GZ} = K_E \times (t_{NZ} - t_{NZ,Ref}) \times e^{(-t/\tau_E)} \qquad (1)$$

wobei $I_{Korr,GZ}$ die Positionskorrektur am Geberzylinder (24), $K_E$ ein Erwärmungsfaktor zur Berücksichtigung der Ausdehnung des Hydraulikfluids aufgrund eines Wärmeeintrags durch den Nehmerzylinder (32), $\tau_E$ eine Zeitkonstante für die Erwärmungsphase des Hydraulikfluids, $t_{NZ}$ die aktuelle Temperatur am Nehmerzylinder (32) und $t_{NZ,Ref}$ die Referenztemperatur ist, die am Nehmerzylinder (32) mindestens vorliegen muss, damit ein entsprechender Wärmeeintrag in das Hydraulikfluid stattfinden kann.

2. Verfahren nach Anspruch 1, **dadurch gekennzeichnet, dass** die Referenztemperatur $t_{NZ,Ref}$ ein konstanter Wert oder die Umgebungstemperatur ist.

3. Verfahren nach Anspruch 1 oder 2, **dadurch gekennzeichnet, dass** die Position des Kolbens (30) in Abhängigkeit von einer Temperaturdifferenz zwischen einer Temperatur am Nehmerzylinder (32) beim Öffnen der Kupplung (2) und einer aktuellen Temperatur am Nehmerzylinder (32) erneut korrigiert wird, um eine thermische Schrumpfung des Hydraulikfluids im Nehmerzylinder (32) zu kompensieren.

4. Verfahren nach Anspruch 3, **dadurch gekennzeichnet, dass** die Korrektur der Position des Kolbens (30) der folgenden Beziehung folgt:

$$I_{Korr,GZ} = K_A \times (t_{NZ,Opn} - t_{NZ}) \qquad (2)$$

wobei $I_{Korr,GZ}$ die Positionskorrektur am Geberzylinder (24), $K_A$ ein Abkühlungsfaktor, $t_{NZ,Opn}$ die Temperatur am Nehmerzylinder (32) zum Zeitpunkt des Öffnens der Kupplung (2) und $t_{NZ}$ die aktuelle Temperatur am Nehmerzylinder (32) ist.

5. Verfahren nach Anspruch 1 und 4, **dadurch gekennzeichnet, dass** die Position des Kolbens (30) durch Überlagerung der Beziehungen (1) und (2) korrigiert wird.

6. Betätigungseinrichtung (18) zur Betätigung einer Kupplung (2), mit einem Geberzylinder (24), einem mit einem Kolben (30) des Geberzylinders (24) verbundenen Aktuator und einem hydraulisch mit dem Geberzylinder (24) verbundenen Nehmerzylinder (32) zum Ausrücken der Kupplung (2), wobei Mittel zur temperaturabhängigen Korrektur der Position des Kolbens (30) des Geberzylinders (24) durch gesteuerte Betätigung des Aktuators (24) vorgesehen sind und das Hydraulikfluid in dem Geberzylinder (24), dem Nehmerzylinder (32) sowie einer den Geberzylinder (24) und den Nehmerzylinder (32) verbindenden Hydraulikleitung (36) eingeschlossen ist, **dadurch gekennzeichnet, dass** die Position des Kolbens (30) in Abhängigkeit von einer Temperaturdifferenz zwischen einer gemessenen Temperatur am Nehmerzylinder (32) und einer Referenztemperatur unmittelbar nach dem Öffnen der Kupplung (2) korrigiert wird, um eine thermische Ausdehnung des Hydraulikfluids im Nehmerzylinder (32) zu kompensieren, wobei die Korrektur der Position des Kolbens (30) der folgenden Beziehung folgt:

$$I_{Korr,GZ} = K_E \times (t_{NZ} - t_{NZ,Ref}) \times e^{(-t/\tau_E)} \qquad (1)$$

wobei $I_{Korr,GZ}$ die Positionskorrektur am Geberzylinder (24), $K_E$ ein Erwärmungsfaktor zur Berücksichtigung der Ausdehnung des Hydraulikfluids aufgrund eines Wärmeeintrags durch den Nehmerzylinder (32), $\tau_E$ eine Zeitkonstante für die Erwärmungsphase des Hydraulikfluids, $t_{NZ}$ die aktuelle Temperatur am Nehmerzylinder (32) und $t_{NZ,Ref}$ die Referenztemperatur ist, die am Nehmerzylinder (32) mindestens vorliegen muss, damit ein entsprechender Wärmeeintrag in das Hydraulikfluid stattfinden kann.

## Claims

1. Method for compensating volume changes of a hydraulic fluid in an actuating device (18) which serves to actuate a clutch (2) and comprises a master cylinder (24), an actuator (28) connected to the piston (30) of the master cylinder (24), and a slave cylinder (32), hydraulically connected to the master cylinder (24), this engaging the clutch (2), the position of a piston (30) of the master cylinder (24) being corrected as a function of temperature by controlled actuation of the actuator (28), and the hydraulic fluid being enclosed in the master cylinder (24), the slave cylinder (32) and a hydraulic line (36) connecting the master cylinder (24) and the slave cylinder (32), **characterized in that** the position of the piston (30) is corrected as a function of a temperature difference between a measured temperature at the slave cylinder (32) and a reference temperature immediately after the opening of the clutch (2), in order to compensate a thermal expansion of the hydraulic fluid in the slave cylinder (32), the correction of the position of the piston (30) obeying the following relationship:

$$I_{Korr,GZ} = K_E \times (t_{NZ} - t_{NZ,Ref}) \times e^{(-t/\tau_E)} \qquad (1)$$

$I_{Korr,GZ}$ being the position correction at the master cylinder (24), $K_E$ being a heating factor for taking account of the expansion of the hydraulic fluid owing to a heat input by the slave cylinder (32), $\tau_E$ being a time constant for the heating phase of the hydraulic fluid, $t_{NZ}$ being the current temperature at the slave cylinder (32), and $t_{NZ,Ref}$ being the reference temperature which must be present at least at the slave cylinder (32) so that a corresponding heat input into the hydraulic fluid can take place.

**2.** Method according to Claim 1, **characterized in that** the reference temperature $t_{NZ,Ref}$ is a constant value or the ambient temperature.

**3.** Method according to Claim 1 or 2, **characterized in that** the position of the piston (30) is corrected anew as a function of a temperature difference between a temperature at the slave cylinder (32) from the opening of the clutch (2) and a current temperature at the slave cylinder (32), in order to compensate a thermal contraction of the hydraulic fluid in the slave cylinder (32).

**4.** Method according to Claim 3, **characterized in that** the correction of the position of the piston (30) obeys the following relationship:

$$I_{Korr,GZ} = K_A \times (t_{NZ,Opn} - t_{NZ}) \quad (2)$$

$I_{Korr,GZ}$ being the position correction at the master cylinder (24), $K_A$ being a cooling factor, $t_{NZ,Opn}$ being the temperature at the slave cylinder (32) at the opening instant of the clutch (2), and $t_{NZ}$ being the current temperature at the slave cylinder (32).

**5.** Method according to Claims 1 and 4, **characterized in that** the position of the piston (30) is corrected by superimposing the relationships (1) and (2).

**6.** Actuating device (18) for actuating a clutch (2), having a master cylinder (24), an actuator connected to a piston (30) of the master cylinder (24), and a slave cylinder (32) hydraulically connected to the master cylinder (24), for disengaging the clutch (2), means being provided for correcting the position of the piston (30) of the master cylinder (24) as a function of temperature by controlled actuation of the actuator (24), and the hydraulic fluid being enclosed in the master cylinder (24), the slave cylinder (32) and the hydraulic line (36) connecting the master cylinder (24) and the slave cylinder (32), **characterized in that** the position of the piston (30) is corrected as a function of a temperature difference between a measured temperature at the slave cylinder (32) and a reference temperature immediately after the opening of the clutch (2), in order to compensate a thermal expansion of the hydraulic fluid in the slave cylinder (32), the correction of the position of the piston (30) obeying the following relationship:

$$I_{Korr,GZ} = K_E \times (t_{NZ} - t_{NZ,Ref}) \times e^{(-t/\tau_E)} \quad (1)$$

$I_{Korr,GZ}$ being the position correction at the master cylinder (24), $K_E$ being a heating factor for taking account of the expansion of the hydraulic fluid owing to a heat input by the slave cylinder (32), $\tau_E$ being a time constant for the heating phase of the hydraulic fluid, $t_{NZ}$ being the current temperature at the slave cylinder (32), and $t_{NZ,Ref}$ being the reference temperature which must be present at least at the slave cylinder (32) so that a corresponding heat input into the hydraulic fluid can take place.

**Revendications**

**1.** Procédé de compensation de variations de volume d'un fluide hydraulique dans un dispositif d'actionnement (18) servant à actionner un embrayage (2), qui comprend un maître-cylindre (24), un actionneur (28) connecté à un piston (30) du maître-cylindre (24) et un cylindre récepteur (32) connecté hydrauliquement au maître-cylindre (24), pour débrayer l'embrayage (2), la position d'un piston (30) du maître-cylindre (24) étant corrigée en fonction de la température par actionnement commandé de l'actionneur (28) et le fluide hydraulique étant enfermé dans le maître-cylindre (24), le cylindre récepteur (32) ainsi qu'une conduite hydraulique (36) reliant le maître-cylindre (24) au cylindre récepteur (32), **caractérisé en ce que** la position du piston (30) est corrigée en fonction d'une différence de température entre une température mesurée au niveau du cylindre récepteur (32) et une température de référence directement après l'ouverture de l'embrayage (2), afin de compenser une dilatation thermique du fluide hydraulique dans le cylindre récepteur (32), la correction de la position du piston (30) satisfaisant à la relation suivante :

$$I_{Korr,GZ} = K_E \ x \ (t_{NZ}-t_{NZ,Ref}) \ x \ e^{(-t/\tau_E)} \ (1)$$

dans laquelle $I_{Korr,GZ}$ est la correction de position au niveau du maître-cylindre (24), $K_E$ est un facteur de réchauffement pour tenir compte de la dilatation du fluide hydraulique du fait d'un apport de chaleur par le cylindre récepteur (32), $\tau_E$ est une constante de temps pour la phase de réchauffement du fluide hydraulique, $t_{NZ}$ est la température actuelle au niveau du cylindre récepteur (32) et $t_{NZ,Ref}$ est la température de référence qui doit au moins s'appliquer au niveau du cylindre récepteur (32) afin qu'un apport de chaleur correspondant puisse avoir lieu dans le fluide hydraulique.

2. Procédé selon la revendication 1, **caractérisé en ce que** la température de référence $t_{NZ,Ref}$ est une valeur constante ou est la température ambiante.

3. Procédé selon la revendication 1 ou 2, **caractérisé en ce que** la position du piston (30) est corrigée à nouveau en fonction d'une différence de température entre une température au niveau du cylindre récepteur (32) à l'ouverture de l'embrayage (2) et une température actuelle au niveau du cylindre récepteur (32), afin de compenser un retrait thermique du fluide hydraulique dans le cylindre récepteur (32).

4. Procédé selon la revendication 3, **caractérisé en ce que** la correction de la position du piston (30) satisfait à la relation suivante :

$$I_{Korr,GZ} = K_A \ x \ (t_{NZ,Opn} - t_{NZ}) \ (2)$$

dans laquelle $I_{Korr,GZ}$ est la correction de position au niveau du maître-cylindre (24), $K_A$ est un facteur de refroidissement, $t_{NZ,Opn}$ est la température au niveau du cylindre récepteur (32) à l'instant de l'ouverture de l'embrayage (2), et $t_{NZ}$ est la température actuelle au niveau du cylindre récepteur (32).

5. Procédé selon les revendications 1 et 4, **caractérisé en ce que** la position du piston (30) est corrigée par superposition des relations (1) et (2).

6. Système d'actionnement (18) pour l'actionnement d'un embrayage (2), comprenant un maître-cylindre (24), un actionneur connecté à un piston (30) du maître-cylindre (24) et un cylindre récepteur (32) connecté hydrauliquement au maître-cylindre (24), pour débrayer l'embrayage (2), des moyens pour corriger en fonction de la température la position du piston (30) du maître-cylindre (24) par actionnement commandé de l'actionneur (28) étant prévus et le fluide hydraulique étant enfermé dans le maître-cylindre (24), le cylindre récepteur (32) ainsi qu'une conduite hydraulique (36) reliant le maître-cylindre (24) au cylindre récepteur (32), **caractérisé en ce que** la position du piston (30) est corrigée en fonction d'une différence de température entre une température mesurée au niveau du cylindre récepteur (32) et une température de référence directement après l'ouverture de l'embrayage (2), afin de compenser une dilatation thermique du fluide hydraulique dans le cylindre récepteur (32), la correction de la position du piston (30) satisfaisant à la relation suivante :

$$I_{Korr,GZ} = K_E \ x \ (t_{NZ}-t_{NZ,Ref}) \ x \ e^{(-t/\tau_E)} \ (1)$$

dans laquelle $I_{Korr,GZ}$ est la correction de position au niveau du maître-cylindre (24), $K_E$ est un facteur de réchauffement pour tenir compte de la dilatation du fluide hydraulique du fait d'un apport de chaleur par le cylindre récepteur (32), $\tau_E$ est une constante de temps pour la phase de réchauffement du fluide hydraulique, $t_{NZ}$ est la température actuelle au niveau du cylindre récepteur (32) et $t_{NZ,Ref}$ est la température de référence qui doit au moins s'appliquer au niveau du cylindre récepteur (32) afin qu'un apport de chaleur correspondant puisse avoir lieu dans le fluide hydraulique.

**Fig. 1**

**Fig. 2**

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1401787 A1
- US 20040157704 A1

- FR 2777230 A1